# FASCICULE DE BREVET EUROPEEN

(11) **EP 3 692 741 B1**
(45) Date de publication et mention de la délivrance du brevet: **09.02.2022**
(21) Numéro de dépôt: 18796713.8
(22) Date de dépôt: 02.10.2018
(51) Int. Cl.: H04W 36/14, H04W 36/22, H04W 36/26, H04W 36/30

(54) **PROCÉDÉ DE MUTATION D'UN TERMINAL MOBILE ENTRE STATIONS D'ACCÈS DANS UN CONTEXTE MULTI-OPÉRATEURS**
VERFAHREN ZUR ÜBERTRAGUNG EINES MOBILEN ENDGERÄTS ZWISCHEN ZUGANGSTATIONEN IN EINEM MEHRBETREIBERKONTEXT
METHOD FOR TRANSFERRING A MOBILE TERMINAL BETWEEN ACCESS STATIONS IN A MULTI-OPERATOR CONTEXT

(30) Priorité: 05.10.2017 FR 1759353
(43) Date de publication de la demande: 12.08.2020
(73) Titulaire: ORANGE, 92130 Issy-les-Moulineaux (FR)
(72) Inventeur: QUINTUNA RODRIGUEZ, Veronica Karina, 92326 Châtillon Cedex (FR); FROMENTOUX, Gaël, 92326 Châtillon Cedex (FR); MARJOU, Xavier, 92326 Châtillon Cedex (FR)
(86) Numéro de dépôt international: PCT/FR2018/052427
(87) Numéro de publication internationale: WO 2019/069013

(56) Documents cités:
- EP-A1- 2 528 394
- EP-A1- 2 866 497
- EP-A2- 1 434 456
- US-A1- 2003 193 910
- US-A1- 2008 159 232
- US-A1- 2013 329 639
- US-A1- 2014 171 079

## Description

### 1. Domaine de l'invention

La demande d'invention se situe dans le domaine des réseaux d'accès mobiles dans un contexte de coopération entre des opérateurs d'infrastructures mobiles contrôlant les réseaux d'accès, notamment, l'invention concerne un procédé, un dispositif et un système de mutation d'un terminal mobile attaché à une première entité d'accès d'un opérateur vers une deuxième entité d'accès contrôlée par un autre opérateur.

### 2. Etat de la technique antérieure

Un terminal mobile est attaché à un instant donné à une station de base d'un réseau mobile contrôlé par un opérateur. Une station de base peut être une station BTS (en anglais *Base Transceiver Station*), une station NodeB, une station eNodeB ou bien tout autre type de station proposant une connexion radio à un terminal mobile. En particulier, il peut s'agir d'une entité virtuelle BBU (en anglais Base Band Unit) ou d'une autre entité virtuelle ou physique qui gère une entité RRH (an anglais *Remote Radio Head*) dans une architecture de type C-RAN (en anglais *Cloud Radio Access Networks*). Grâce à cet attachement, le terminal mobile, et donc l'utilisateur s'il s'agit par exemple d'un smartphone, communique avec un autre terminal, fixe ou mobile, attaché au même réseau mobile ou à un autre réseau, de type fixe ou mobile. L'opérateur déploie des stations de base sur une zone géographique de façon qu'un terminal mobile, lorsqu'il est en déplacement, puisse s'attacher à une des stations de base déployées et bénéficier d'une bonne qualité de communication pour la transmission des données. Un mécanisme de « handover » est mis en œuvre pour permettre au terminal de transmettre et recevoir des données sans interruption lorsque le terminal mobile s'attache successivement à plusieurs stations de base. Selon les techniques de l'art antérieur, lorsque le terminal mobile n'est pas en déplacement, il n'a pas à priori de raisons de s'attacher à une autre station de base, du même opérateur ou d'un opérateur différent. En outre, même s'il avait des raisons de le faire, un opérateur du réseau ne déploie généralement pas de multiples stations de base pour une zone géographique donnée mais vise plutôt à répartir les stations de base sur un territoire pour éviter que des zones géographiques, dites blanches, n'aient aucune station de base à laquelle un terminal mobile, présent dans ces zones blanches, puisse s'attacher.

Ainsi, lorsqu'un terminal mobile dispose d'une mauvaise connectivité dans un réseau mobile d'un opérateur, il ne lui est généralement pas possible de s'attacher à une autre station de base du réseau de l'opérateur, soit parce qu'il est hors de portée de cette autre station ou bien parce que les techniques de handover ne le prévoient pas. Ce problème relatif à une mauvaise connectivité impacte le terminal mobile lui-même car le débit des données du terminal est moindre, sa batterie est altérée pour une qualité de connexion faible et le fonctionnement des applications sur le terminal mobile en pâtissent. Cette mauvaise connectivité affecte également l'opérateur du réseau mobile puisque des capacités de transmission sont utilisées de façon non efficace. En outre, les interactions électromagnétiques sont accentuées par le fait que le terminal mobile se met en recherche de canaux de transmission plus performants, par exemple en utilisant une puissance de transmission plus importante, et l'opérateur doit en outre mettre en cache des données en attendant de pouvoir les transmettre au terminal mobile qui peut se trouver hors de portée.

Dans le but de résoudre ce problème, une solution basée sur une coopération d'opérateurs contrôlant des réseaux mobiles distincts apparaît intéressante. Ce type de coopération, notamment décrite dans le document « Why user swapping could be the best coordination mechanism in a cellular network? » (Globecom, Wireless Netwok Symposium, 2013), permet à un terminal mobile pour lequel la qualité de connexion s'avère peu performante d'être muté sur une station de base d'un réseau mobile contrôlé par un autre opérateur. Ce mécanisme permet ainsi d'offrir une qualité de connexion meilleure aux terminaux mobiles et donc d'améliorer la couverture géographique des opérateurs grâce à une collaboration entre opérateurs présents sur la zone géographique. Cette solution permet en quelque sorte d'étendre les possibilités de roaming à des problèmes de qualité de connexion et pas seulement à des problèmes de couverture radio. Le roaming est en effet mis en œuvre pour qu'un opérateur puisse bénéficier de couverture radio dans une zone géographique donnée, grâce à des réseaux d'autres opérateurs, lorsque lui-même n'a pas de réseau radio dans cette zone. Les techniques de roaming supposent en outre qu'un terminal puisse s'attacher à une station de base d'un autre opérateur grâce à un accord passé entre les opérateurs garantissant à un terminal de s'attacher à une station de base de l'autre opérateur sans prendre en compte les conditions de trafic sur la station de base et sans autre condition que l'existence d'un accord global au moment où le terminal se connecte.

Le document US 2008/159232 A1 décrit un procédé et un système permettant d'améliorer le transfert (handoff) d'un terminal mobile attaché à un réseau d'accès vers un autre réseau d'accès d'un même opérateur, le transfert étant mis en œuvre par une fonction « policy » en fonction des conditions du terminal mobile et des conditions des réseaux d'accès.

Le document US 2013/329639 A1 décrit un dispositif et un programme mis en œuvre dans un équipement utilisateur sans fil permettant à cet équipement de pouvoir associer une pluralité de modules SIMs avec une pluralité d'accès radios dans l'équipement. Le document décrit en outre un module de communication dans l'équipement permettant la sélection dynamique d'un réseau d'opérateur accessible par l'un des modules SIMs.

Le document EP 1 434 456 A2 décrit un procédé permettant de réduire les interférences et d'améliorer la qualité du lien radio entre des systèmes radio ainsi que de répartir la charge entre des opérateurs radio ou pour un opérateur radio.

Le document EP 2 866 497 A1 décrit une unité d'information et un système permettant d'obtenir une qualité d'une communication sans fil d'un terminal avec une station d'accès d'un premier opérateur et de pouvoir commuter le terminal à une station d'accès d'un deuxième opérateur en fonction de la qualité obtenue.

Le document EP 2 528 394 A1 décrit un système de communications mobiles comprenant un terminal de communication mobile, un premier système de communication et un deuxième système de communication, un équipement de communication utilisé dans le système de communications mobiles. Le document décrit en outre une méthode de communication mobile mise en œuvre dans le système où une cellule du second système est sélectionnée parmi un ensemble de cellules en fonction d'un niveau de priorité associée à la cellule, notamment en fonction d'un facteur considérant un poids relatif à un nombre d'échecs passés de redirection ou de handovers inter-RATs.

Si l'idée d'une coopération entre opérateurs pour assurer la connectivité d'un terminal mobile est connue, il n'existe pas de procédé permettant de réaliser de façon dynamique, et en prenant en compte les conditions relatives à l'écoulement du trafic de données, la mutation d'un terminal mobile attaché à une première station de base vers une deuxième station contrôlée par un opérateur différent.

La présente invention a pour objet de remédier à des inconvénients de l'état de la technique.

### 3. Exposé de l'invention

L'invention vient améliorer la situation à l'aide d'un procédé de mutation d'un terminal mobile comme défini par la revendication 1.

Selon le procédé proposé, la mutation d'un terminal d'une première entité d'accès, dite d'origine, contrôlée par un premier opérateur, vers une deuxième entité d'accès, dite de destination et contrôlée par un opérateur différent du premier, permet de pouvoir procurer au terminal une meilleure connectivité à cet instant, et cela même si le terminal n'est pas en mouvement. Cette mutation permet en outre aux opérateurs de contrôler leurs entités d'accès de façon à éviter une surcharge de celles-ci, en termes de terminaux connectés et de volume de trafic. Pour mettre en œuvre le procédé, le terminal doit pouvoir s'attacher à une deuxième entité d'accès, c'est-à-dire être à portée d'une transmission radio de cette entité d'accès. En outre l'attachement suppose également pour le terminal de pouvoir s'enregistrer auprès de la deuxième entité d'accès, ce qui suppose un accord entre les deux opérateurs distincts contrôlant les deux entités d'accès. L'accord de l'opérateur qui contrôle la deuxième entité d'accès est obtenu de façon dynamique grâce au facteur de coopération intervenant dans la détermination d'une valeur d'éligibilité, ce qui rend le procédé plus intéressant par rapport à une simple technique d'itinérance (dite aussi de « roaming ») utilisée par les opérateurs, où l'accord n'est pas spécifique à une mutation telle que proposée. En outre, à partir des valeurs d'éligibilité calculées pour chaque entité d'accès, le dispositif de contrôle peut constater que le terminal doit être muté sur une deuxième entité d'accès. En effet, si le dispositif de contrôle détermine que la qualité de connexion à la première entité d'accès n'est pas satisfaisante, il décide de mettre en œuvre la mutation du terminal sur la deuxième entité d'accès. La qualité de la transmission des données entre le terminal et une entité d'accès est avantageusement utilisée pour la sélection de la deuxième entité. Une entité transmet ainsi une estimation de la qualité du canal pour le terminal. S'il s'agit de la première entité, une valeur réelle de la qualité du canal peut être transmise au dispositif de contrôle. En particulier la qualité peut être exprimée grâce au ratio SINR (en anglais *Signal-to-Interference-plus-Noise Ratio*) largement utilisé dans les réseaux radio et qui peut être utilisé pour estimer une valeur d'éligibilité à une entité d'accès. Cette valeur utilisée par exemple avec une information sur la charge des entités d'accès et en complément d'un facteur de coopération, permet de choisir au mieux l'entité vers laquelle va être muté le terminal tout en réutilisant un indicateur largement utilisé par les différents opérateurs. Une autre option consiste pour les entités à transmettre une information estimée de type CQI (Channel Quality Indicator) voire les deux informations, à savoir le ratio SINR et l'information CQI.

La valeur d'éligibilité est basée sur un paramètre de transmission, telle qu'une valeur CQI ou SINR, et sur un facteur de coopération entre les opérateurs contrôlant respectivement la première et la deuxième entité. Le facteur de coopération peut, dans un exemple non couvert par l'invention revendiquée, être une valeur binaire indiquant une coopération effective ou non des opérateurs (1 si coopération, 0 si pas de coopération pour cette mutation). Le facteur de coopération peut être une valeur incrémentée (respectivement décrémentée) dès lors qu'une mutation entre deux entités de chaque opérateur a réussi (respectivement échoué). La sélection de la deuxième entité d'accès est réalisée en fonction des valeurs d'éligibilité calculées pour chaque entité à laquelle le terminal peut potentiellement s'attacher. Le dispositif de contrôle peut par exemple sélectionner l'entité ayant la valeur d'éligibilité la plus forte. Une fois qu'une deuxième entité d'accès est sélectionnée, le dispositif de contrôle émet la décision de mutation aux deux entités concernées par la mutation. Ainsi, la première entité d'accès apprend qu'un terminal qui lui est attaché doit être muté vers une deuxième entité d'accès et l'information sur cette deuxième entité d'accès est communiquée à la première entité d'accès. L'information sur la deuxième entité d'accès peut être une adresse IP (en anglais *Internet Protocol*), un nom de type FQDN (en anglais *Fully Qualified Domain Name*) ou toute autre information permettant à la première entité d'accès de connaître, voire de solliciter, la deuxième entité d'accès pour la mise en œuvre effective de la mutation. La seconde entité d'accès reçoit également le message de mutation afin notamment de ne pas rejeter la demande d'attachement du terminal lorsque celui-ci vient s'attacher à elle. La mutation effective du terminal vers la deuxième entité d'accès est réalisée conformément aux techniques connues de « handover » 3GPP (3rd Generation Partnership Project).

Selon un aspect de l'invention, le procédé de mutation comprend en outre une étape de réception en provenance de la première et de la deuxième entité d'un message d'indication comprenant une donnée d'acquittement de la mutation.

La première entité et la seconde entité peuvent avantageusement transmettre au dispositif de contrôle un message d'indication, informant ainsi le dispositif de contrôle que la mutation du terminal a été exécutée conformément au message de mutation reçu. Le dispositif de contrôle peut utiliser ce message par exemple pour mettre à jour le facteur de coopération entre les deux opérateurs contrôlant les deux entités d'accès. Une mutation réussie permet en effet de donner une indication sur une coopération réussie entre les deux opérateurs, cette indication pouvant être mise à profit par le dispositif de contrôle pour les prochaines mutations à gérer.

Selon un autre aspect de l'invention, le message d'indication du procédé de mutation comprend en outre l'au moins un paramètre de transmission de données, mis à jour suite à la mutation, entre ledit terminal et chacune des deux entités d'accès.

Outre la donnée d'acquittement, la première et la deuxième station d'accès transmettent leurs paramètres de transmission de données respectifs, mis à jour suite à la mutation, permettant ainsi au dispositif de contrôle de mettre à jour les informations sur les stations d'accès de l'ensemble. Le dispositif de contrôle peut ainsi par exemple connaître le nombre de terminaux connectés, les canaux de transmission disponibles et les informations de type CQI. Ces paramètres peuvent être utilisés par le dispositif de contrôle lors d'une future mutation à gérer.

Selon un autre aspect de l'invention, le procédé mutation comprend en outre une étape d'émission par le dispositif de contrôle à destination de chacune des deux entités un message de mise à jour de leur valeur d'éligibilité suite à la mutation.

Une fois que la mutation a eu lieu et que le dispositif de contrôle a calculé une nouvelle valeur d'éligibilité pour chacune entité d'accès, prenant en compte les informations transmises par les entités d'accès ainsi que le facteur de coopération mis à jour, il la transmet aux deux entités. Cet envoi permet à ces deux entités de pouvoir ensuite gérer des mobilités de terminaux de façon autonome, sans recourir systématiquement à un dispositif de contrôle centralisé. Si chaque entité d'accès dispose de la valeur d'éligibilité mis à jour, elles peuvent gérer des mutations entre elles, sans solliciter le dispositif de contrôle centralisé, sauvegardant ainsi des ressources de ce dispositif et les réseaux de transmission.

Selon un autre aspect de l'invention, le procédé de mutation comprend en outre une étape de réception en provenance du terminal d'un message d'information comprenant au moins une donnée de communication.

En plus des paramètres de transmission transmis par les différentes entités de l'ensemble, le dispositif de contrôle reçoit un message d'information de la part du terminal, ce message comprenant des données de communication, qui peuvent être utilisées de façon complémentaire, aux paramètres reçus des entités d'accès. Ces données sont utilisées par le dispositif de contrôle pour améliorer la détermination de la valeur d'éligibilité et par conséquent, de mieux sélectionner la deuxième entité d'accès. Notamment, le terminal peut transmettre des informations de débit d'émission et de réception, telles que constatées par le terminal, qui peuvent être différentes des paramètres de débit transmis par les entités d'accès (par exemple le nombre de PRB (en anglais *Physical Resource Block*) alloués dans un période donnée).

Selon un autre aspect de l'invention, le message d'information du procédé de mutation comprend en outre un paramètre de positionnement géographique du terminal.

Le message d'information transmis par le terminal comprend notamment un paramètre de positionnement géographique que le dispositif de contrôle met à profit pour déterminer les valeurs d'éligibilité associées aux entités d'accès en prenant en compte de façon accrue la position du terminal. En l'absence d'un tel paramètre, le dispositif de contrôle ne peut utiliser que des informations de localisation en provenance des entités d'accès, qui ne connaissent pas de façon précise la localisation des terminaux qui leur sont attachés. Grâce à cette information, la deuxième entité d'accès sélectionnée sera mieux positionnée par rapport à la localisation géographique effective du terminal. L'élément peut par exemple être une donnée GPS (en anglais *Global Positionning System*).

Selon un autre aspect de l'invention, dans le procédé de mutation, le message de connectivité comprend en outre une donnée sur la charge de l'entité.

Un des paramètres utilisé par le dispositif de contrôle pour la détermination de la valeur d'éligibilité est la charge de chaque entité d'accès, qui peut correspondre au nombre de terminaux attachés simultanément à chaque entité d'accès ou bien au débit total des communications des terminaux attachés à chaque entité d'accès à un moment donné. Il peut également s'agir des deux informations (nombre de terminaux et débit). Cette information est particulièrement pertinente, d'une part dans la prise de décision de muter un terminal d'une première entité d'accès vers une deuxième entité d'accès et d'autre part pour sélectionner la deuxième entité d'accès vers laquelle est muté le terminal. Cette information n'est pas considérée dans les cas d'itinérance entre deux entités d'accès contrôlées par un même opérateur, selon les techniques de l'art antérieur, et s'avère particulièrement utile pour mieux répartir le trafic sur les entités d'accès d'un ensemble d'entités localisées dans une zone géographique.

Selon un autre aspect de l'invention, le message de mutation du procédé de mutation comprend en outre une information relative à la durée de la mutation.

Les opérateurs peuvent avoir un intérêt à limiter la durée pendant laquelle un terminal initialement attaché à la première entité d'accès peut s'attacher à une deuxième entité d'accès d'un autre opérateur. En effet, les terminaux s'attachant à la deuxième entité d'accès selon le procédé utilisent des ressources que les terminaux ayant un contrat avec l'opérateur contrôlant la deuxième entité ne peuvent utiliser. Les clients de l'opérateur contrôlant la deuxième entité pourraient donc pâtir d'une trop forte utilisation des ressources de la deuxième entité, ce qui pourrait nécessiter leur propre mutation vers une entité d'un deuxième opérateur, augmentant le nombre de mutations et la gestion de ces mutations associées par le serveur de contrôle. Une limitation de la durée de mutation permet donc de limiter la consommation des ressources de l'entité de destination, contrôlée par l'autre opérateur. Si le terminal muté a besoin d'une durée de mutation plus importante que la durée fixée, une nouvelle mutation peut être opérée.

Selon un autre aspect non couvert par l'invention, dans le procédé de mutation, le facteur de coopération est déterminé en fonction de mutations antérieures.

Le facteur de coopération est mis à jour régulièrement pour tirer parti des mutations réussies ainsi que des mutations qui ont échoué. Ainsi, sachant que les mutations sont mises en œuvre de façon dynamique de façon à tenir compte des paramètres de transmission mais aussi des interactions entre les opérateurs, la technique d'apprentissage est importante. Le dispositif de contrôle, en tenant compte des mutations passées, et de leurs succès ou échecs passés, peut prendre des décisions de mutation ayant plus de chances de réussite. En effet, si pour des raisons diverses, et en dépit de capacités de transmission disponibles sur des entités d'accès contrôlées par un opérateur donné, des échecs de mutation vers une entité d'accès d'un opérateur sont enregistrés, le dispositif pourra pondérer défavorablement une coopération avec une telle entité d'accès pour les mutations futures.

Selon un autre aspect de l'invention, dans le procédé de mutation, l'ensemble d'entités d'accès se trouve dans une zone géographique délimitée en fonction de la localisation géographique de la première entité.

Le procédé est mis en œuvre pour permettre la mutation du terminal vers une entité d'accès à portée de transmission radio du terminal. Il peut donc être nécessaire de circonscrire la zone au sein de laquelle une entité d'accès peut être effectivement sélectionnée. Cette circonscription peut être effectuée à partir de donnée géographique de la première station d'accès, à laquelle est attaché initialement le terminal ou à partir de la localisation du terminal. Cette information de localisation de la première station d'accès peut être obtenue dans le message de connectivité ou bien être obtenu à partir d'un identifiant de la station d'accès transmettant le message de connectivité. Le dispositif de contrôle peut ainsi utiliser une base de données pour déterminer la localisation géographique de la première entité d'accès à partir de l'identifiant reçu. Une base de données peut également être utilisée pour obtenir la zone de circonscription de la première entité d'accès et l'ensemble des entités d'accès de la zone.

Selon un autre aspect de l'invention, dans le procédé de mutation, le message de connectivité comprend en outre un identifiant de tranche de réseau.

La mutation entre deux entités d'accès peut également dépendre de la tranche de réseau (en anglais *Network Slice*) à laquelle est attaché le terminal. Une mutation pourra s'opérer dans ce cas uniquement vers une entité d'accès supportant également la tranche de réseau de façon à ce qu'il n'y ait pas rupture de communication et que le terminal ne perde pas de données lors de la mutation. Il est dans ce cas nécessaire que le dispositif de contrôle obtienne l'identifiant de tranche de réseau pour l'intégrer à la détermination de la valeur d'éligibilité et donc à la sélection d'une entité d'accès compatible avec la tranche de réseau à laquelle est attaché le terminal.

Les différents aspects du procédé de mutation qui viennent d'être décrits peuvent être mis en œuvre indépendamment les uns des autres ou en combinaison les uns avec les autres, sans sortir du cadre de l'invention telle que revendiquée.

L'invention concerne également un dispositif de mutation d'un terminal mobile comme défini par la revendication 11.

Ce dispositif, apte à mettre en œuvre dans tous ses modes de réalisation le procédé de mutation qui vient d'être décrit, est destiné à être mis en œuvre dans un serveur indépendant des opérateurs ou dans un dispositif contrôlé par l'un des opérateurs.

L'invention concerne aussi un système de mutation comprenant :
- un dispositif de contrôle comprenant un dispositif de mutation,
- une première entité d'accès d'un opérateur,
- une deuxième entité d'accès contrôlée par un autre opérateur.

L'invention concerne aussi un programme d'ordinateur comprenant des instructions pour la mise en œuvre des étapes du procédé de mutation qui vient d'être décrit, lorsque ce programme est exécuté par un processeur du dispositif de mutation.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par le dispositif de mutation et et comportant des instructions du programme d'ordinateur tel que mentionné ci-dessus.

Le support d'informations peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente une vue simplifiée d'une architecture dans laquelle est mis en œuvre le procédé de mutation selon un mode de réalisation,
- la figure 2 présente les différentes étapes du procédé de mutation selon un aspect de l'invention,
- la figure 3 présente un aperçu du procédé de mutation selon un premier mode de réalisation de l'invention,
- la figure 4 présente un aperçu du procédé de mutation selon un deuxième mode de réalisation de l'invention,
- la figure 5 présente un exemple de structure d'un dispositif de mutation selon un aspect de l'invention.

### 5. Description détaillée d'au moins un mode de réalisation de l'invention

Dans la suite de la description, on présente des exemples de plusieurs modes de réalisation de l'invention dans une infrastructure de communication mobile générique. L'invention peut notamment être mise en oeuvre dans une infrastructure de communication mobile spécifiée au sein de l'organisme 3GPP, telle que les réseaux dits 3G (Troisième Génération), 4G (Quatrième Génération), 5G (Cinquième Génération) ainsi que les réseaux mobiles basés sur des technologies basées sur les spécifications de l'organisme IEEE (Institute of Electrical and Electronics Engineers).

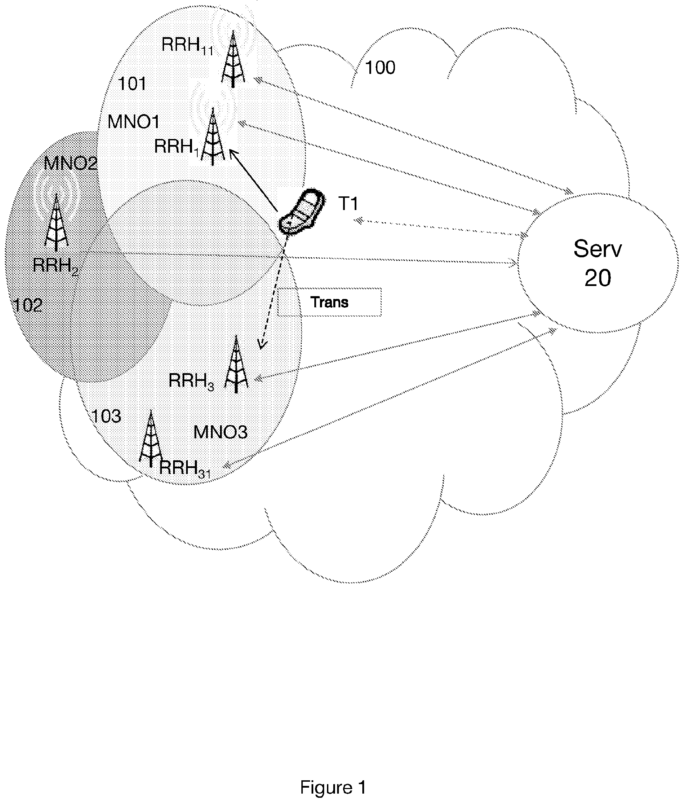

On se réfère tout d'abord à la **figure 1** qui présente une vue simplifiée d'une architecture dans laquelle est mise en œuvre le procédé de mutation selon un mode de réalisation.

Un réseau global de communications 100, qui peut être une infrastructure mobile de n'importe quelle génération, auquel un terminal T1 se connecte. Le réseau global 100 est constitué d'un ensemble de réseaux contrôlés par des opérateurs différents. Sur la figure 1, les réseaux 101, 102, 103 respectivement contrôlés par les opérateurs MNO1, MNO2 et MNO3 font partie du réseau global 100. Le réseau 101 comprend des stations d'accès, aussi appelées entités d'accès. Ces entités d'accès peuvent être des équipements BTS, des équipements eNodeB, ou des équipements d'accès radio 5G. Les réseaux 101 comprend les entités d'accès RRH₁ et RRH₁₁, le réseau 102 comprend l'entité d'accès RRH₂ tandis que le réseau 103 comprend les entités d'accès RRH₃ et RRH₃₁. Il n'existe pas à priori de limitation quant au nombre d'entités d'accès dans un réseau d'opérateur et au nombre de réseaux d'opérateurs dans un réseau global de communication. Il est fait référence à des entités d'accès de type RRH. Il peut également s'agir d'entités RRH + BBU, le dispositif BBU pouvant être co-localisé avec l'antenne RRH ou bien plus centralisé. Par simplicité, dans la suite du texte, le terme RRH sera utilisé même si une entité d'accès peut être une RRH et une BBU.

Les réseaux 101, 102, 103 contrôlés par des entités différentes, selon les techniques antérieures, ne collaborent pas pour la fourniture de connectivité au terminal T1. En effet, les opérateurs collaborent le plus souvent par l'établissement d'accords d'itinérance permettant d'assurer une couverture spatiale plus importante pour les terminaux. Grâce à ces accords, un terminal peut ainsi obtenir une connectivité en s'attachant à un réseau contrôlé par un opérateur avec lequel l'utilisateur du terminal n'a pas contractualisé d'offre. Dans l'architecture de la figure 1, les 3 opérateurs MNO1, MNO2 et MNO3 n'ont pas à priori d'accord prédéfini et le terminal T1 est sous la couverture radio des 3 opérateurs, c'est-à-dire qu'il peut dans une zone de couverture radio des entités d'accès de chaque réseau 101, 102, 103. Dans le réseau 100 de communication, un serveur 20 de contrôle est déployé. Ce serveur 20 a pour objet de gérer la connectivité du terminal T1 de façon à ce qu'il bénéficie de la meilleure qualité de transmission des données. Le serveur 20 interagit donc avec les entités d'accès des différents réseaux 101, 102, 103 de communications et également, de façon optionnelle, avec le terminal T1. Le serveur 20 peut être géré par un des trois opérateurs MNO1, MNO2, MNO3 ou bien encore être géré par une entité distincte de ces trois opérateurs. Le terminal T1 est initialement attaché à l'entité d'accès RRH₁. L'attachement du terminal 1 induit que le terminal est identifié et authentifié par l'entité RRH₁ ou bien par un autre dispositif du réseau 100, par exemple par l'envoi de message « Attach Request » transmis à la station RRH₁ et retransmis à un dispositif de type MME (en anglais *Mobility Management Entity*) ou SGSN (en anglais *Serving GPRS Support Node*). Le serveur 20 échange des informations, de façon régulière, avec les entités d'accès RRH₁, RRH₁₁, RRH₂, RRH₃, RRH₃₁ voire également avec le terminal T1. Grâce aux messages échangés, le serveur 20 décide de muter le terminal T1 sur une autre entité d'accès RRH₃ contrôlée par l'opérateur MNO3. La mutation intervient sans qu'il y ait rupture de communication pour le terminal T1 et indépendamment du fait que le terminal T1 soit en situation de mobilité ou non. En outre, il n'est pas nécessaire qu'il y ait un accord prédéfini entre les opérateurs MNO1 et MNO3.

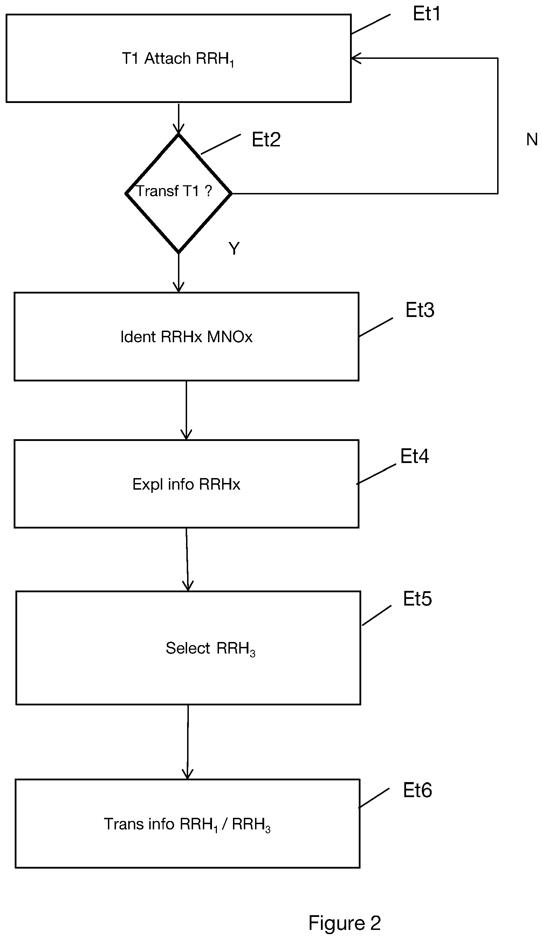

En relation avec la **figure 2**, les différentes étapes du procédé de mutation selon un aspect de l'invention sont présentées. Les étapes décrites dans la figure 2 sont mises en œuvre par le serveur 20 de contrôle, tel que décrit dans la figure 1.

Lors d'une étape Et1, le serveur 20 de contrôle, tel que décrit dans la figure 1, a connaissance que le terminal T1 est attaché à une entité d'accès RRH₁. Le serveur 20 de contrôle l'apprend suite à l'envoi par l'entité RRH₁ au serveur 20 d'un message de connectivité comprenant l'identité des terminaux qui lui sont connectés et divers paramètres parmi lesquels le ratio SINR associé à chaque terminal attaché. Le message de connectivité est transmis de façon régulière, c'est-à-dire à intervalle régulier, par chaque entité RRH pour laquelle le serveur 20 met en œuvre le procédé de mutation.

Lors de l'étape Et2, le serveur détecte que le terminal T1 ne bénéficie pas d'une qualité de communication suffisante. Cette détection est opérée à partir d'un message de connectivité reçu de l'entité T1 et indiquant que le ratio SINR est en dessous d'un seuil prédéfini. Le serveur 20 évalue, à chaque réception d'un message de connectivité, si le ratio pour le terminal T1 est suffisamment bon, auquel cas il ne mute pas le terminal, ou bien trop mauvais, ce qui nécessite une mutation.

Lors de l'étape Et3, le serveur 20 détermine un ensemble d'entités d'accès auxquelles le terminal T1 est susceptible de pouvoir s'attacher dans le cadre du procédé de mutation. Pour déterminer les entités, le serveur 20 peut utiliser des informations transmises par l'entité RRH₁. Par exemple, il peut utiliser une information de localisation de l'entité RRH₁ ou un identifiant de l'entité RRH₁ qu'il exploite pour obtenir sa localisation géographique. Le serveur 20, peut également recevoir un message du terminal T1, le message comprenant une information de localisation lui permettant d'identifier ensuite les entités d'accès à portée du terminal T1, c'est-à-dire dont les ondes radio peuvent être reçues du terminal T1.

Lors de l'étape Et4, le serveur 20 exploite les informations transmises par les entités RRH de l'ensemble dans les messages de connectivité respectivement transmis par chaque entité RRH. Le serveur 20 exploite en outre les informations relatives à la coopération entre les opérateurs intervenant dans le procédé. Dans le cas où les trois opérateurs MNO1, MNO2 et MNO3 interviennent dans le procédé de mutation du terminal T1, le serveur utilise le facteur de coopération entre d'une part l'entité d'accès de l'opérateur MNO1 et chaque entité d'accès de l'ensemble contrôlée par MNO2 et d'autre part entre l'entité d'accès de l'opérateur MNO1 et chaque entité d'accès de l'ensemble contrôlée par l'opérateur MNO3. Ce facteur selon l'invention est un pourcentage de mutations réussies entre les entités respectives des deux opérateurs dans un intervalle de temps passé. Dans un mode de réalisation non couvert par l'invention, cet facteur peut par exemple être un indicateur transmis par une entité de gestion, l'indicateur prenant en compte les différentes interactions entre les deux opérateurs (itinérance, partenariats, mutations...) en plus des interactions entre les entités elles-mêmes.

Lors de l'étape Et5, le serveur 20 sélectionne une entité RRH, dans le cas présent l'entité RRH₃, parmi l'ensemble des entités à portée radio, en prenant en compte le facteur de coopération entre les entités et les données transmises dans les messages de connectivité reçus de chaque entité. Notamment, l'information sur la charge de l'entité d'accès, représentée par le nombre de terminaux simultanément connectés ou le débit total de tous les terminaux attachés à une entité d'accès, est importante. L'objectif est améliorer le débit du terminal T1 et par conséquence la Qualité d'Expérience, grâce à la prise en compte du le facteur de coopération entre entités.

Lors de l'étape Et6, le serveur 20 transmet aux deux entités concernées par la mutation, à savoir l'entité RRH₁ et l'entité RRH₃, un message de mutation comprenant notamment les identifiants des entités RRH₁ et RRH₃. Ainsi, l'entité RRH₁ peut mettre en œuvre la mutation effective du terminal T1, par exemple en transmettant au terminal T1 un message lui indiquant qu'il doit s'attacher à l'entité RRH₃. L'entité RRH₃, grâce au message de mutation reçu, est informée que le terminal T1 demandera une demande d'attachement et pourra poursuivre la procédure d'attachement lorsqu'elle recevra une telle demande. Le message de mutation peut également comprendre une clé d'authentification permettant de mettre en œuvre une sécurité accrue dans le procédé de mutation. La mutation effective du terminal T1 de l'entité RRH₁ à l'entité RRH₃ se produit sans solliciter le serveur 20.

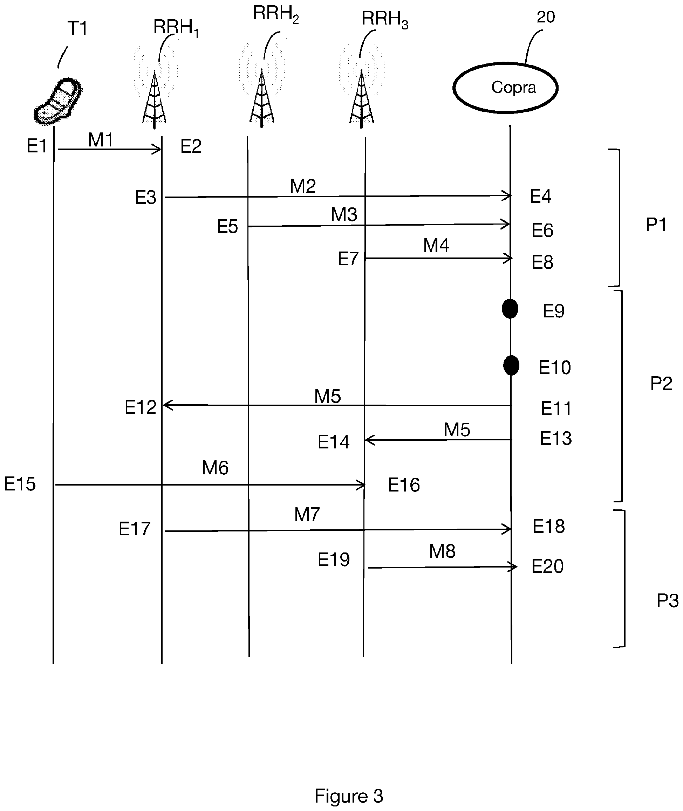

On se réfère maintenant à la **figure 3** qui présente un aperçu du procédé de mutation selon un premier mode de réalisation de l'invention.

Le procédé de mutation se déroule suivant trois phases nommées P1, P2, P3 sur la figure 3. La phase P1 correspond à une phase d'initialisation de la mutation. La phase P2 correspond à une phase d'exécution de la mutation tandis que la phase P3 correspond à la phase d'acquittement de la mutation qui peut être également considérée comme une phase d'apprentissage.

La phase P1 démarre à l'étape E1 où le terminal T1 s'attache à l'entité RRH₁ en envoyant un message M1 à l'entité RRH₁. L'entité RRH₁ reçoit le message M1 lors de l'étape E2. L'attachement du terminal T1 n'est pas décrit en détail et inclut notamment des échanges liés à l'authentification, à la configuration et à l'attribution d'un canal de transmission au terminal T1, ces échanges pouvant requérir la contribution de dispositifs du réseau mobile en complément de l'entité RRH₁. Durant la phase P1, les différentes entités RRH₁ contrôlé par l'opérateur MNO1, RRH₂ contrôlé par l'opérateur MNO2, RRH₃ contrôlé par l'opérateur MNO3 et contribuant au procédé de mutation transmettent lors des étapes respectives E3, E5, E7 des messages M2, M3, M4 de connectivité à un dispositif 20 de contrôle en charge de la gestion des mutations entre les différentes entités. Les opérateurs MNO1, MNO2, MNO3 gèrent plusieurs entités chacune comme indiqué dans la figure 1, mais à des fins de simplification, une seule entité par opérateur est représentée sur la figure 3. Notamment les entités RRH₁₁ et RRH₃₁ ne sont pas représentées. Ces messages de connectivité sont respectivement reçus par le dispositif 20 lors des étapes E4, E6, E8. Il est à noter que les messages M2, M3, M4 peuvent être transmis à intervalles réguliers au dispositif 20 de façon à ce que les conditions de mutation réelles soient prises en compte pour la mutation. Les messages M2, M3, M4 comprennent par exemple des paramètres sur la charge des entités d'accès, comme le nombre de terminaux simultanément attachés, le débit de données cumulé des terminaux attachés. Les messages M2, M3, M4 comprennent également des informations relatives à la qualité radio des canaux de transmission des entités RRH₁, RRH₂, RRH₃, telles que les ratios SINR des terminaux attachés. La phase P1 d'initialisation est terminée.

La phase P2 commence lorsque le serveur 20, lors de l'étape E9, analyse les données reçues et calcule des valeurs d'éligibilité associés à chaque entité RRH₁, RRH₂, RRH₃. Ces valeurs d'éligibilité sont calculées à partir des paramètres présents dans les messages M2, M3, M4 reçus et notamment les informations de qualité de service et de charge de chaque entité RRH₁, RRH₂, RRH₃. Les valeurs d'éligibilité prennent en compte en outre un facteur de coopération entre les différentes entités RRH₁, RRH₂, RRH₃. Le serveur 20, selon un exemple, garde un historique des mutations réalisées dans le passé et calcule un facteur de coopération qui est le ratio du nombre de mutations réussies entre deux entités d'accès par rapport aux nombre de mutations transmises. Selon un autre exemple, le facteur de coopération prend en compte le ratio du nombre de terminaux mutés, contrôlés par un opérateur, par rapport au nombre total de terminaux gérés par cet opérateur. La valeur d'éligibilité associée à chaque entité est notamment mise à jour en fonction des messages de connectivité reçus et des mutations mises en œuvre.

Lors de l'étape E10, le serveur 20 détecte que le terminal T1 doit être muté sur une autre entité et sélectionne l'entité RRH₃. La détection peut être réalisée en fonction du message M2 reçu de l'entité RRH₁. Selon un exemple, le serveur 20 détecte que le ratio SINR pour le terminal T1 sur l'entité RRH₁ est en dessous d'un seuil considéré comme acceptable ou bien que l'entité RRH₁ a un nombre de terminaux attachés trop important par rapport aux entités voisines, et le serveur 20 considère que des terminaux doivent être mutés. La sélection des terminaux à muter est propre au serveur et il peut, selon un exemple, sélectionner les terminaux ayant une moindre qualité de transmission. La sélection de l'entité RRH₃ pour muter le terminal T1 est réalisée en fonction des seuils d'éligibilité déterminés lors de l'étape E9. L'entité RRH₃ ayant une meilleure valeur d'éligibilité que RRH₂, le serveur 20 sélectionne RRH₃. Selon une alternative, le serveur 20 considère un sous ensemble d'entités pour la sélection. Dans le cas où le serveur 20 reçoit des messages de connectivité d'entités réparties sur un large territoire, il peut définir une zone géographique au sein de laquelle il sélectionne l'entité RRH₃ de destination. La zone géographique peut être définie, selon un exemple, en fonction d'un identifiant ou de la position géographique de l'entité RRH₁. S'il s'agit d'un identifiant, le serveur 20 doit associer une localisation géographique à l'identifiant par exemple en recourant à une base de données faisant le lien entre les identifiant des entités et leurs positions géographiques.

Une fois l'entité RRH₃ sélectionnée, le serveur 20 transmet lors des étapes E11 et E13 aux entités RRH₁ et RRH₃ un message M5 d'instruction de mutation comprenant l'identifiant du terminal T1 ainsi que les identifiants de l'entité source RRH₁ et de l'entité de destination RRH₃.

L'instruction de mutation peut optionnellement comprendre une indication de durée pendant laquelle la mutation est effective. Cela peut correspondre par exemple à une durée maximale de validité à la fin de laquelle la mutation prendra fin, c'est-à-dire à la fin de laquelle le terminal T1 ne sera plus attaché à l'entité RRH₃. Cette indication de durée peut être une valeur constante ou peut dépendre du nombre ou de la durée des mutations réalisées précédemment, possiblement entre les deux entités des opérateurs concernés par la mutation en cours. L'objectif de cette indication de durée est de limiter la durée pendant laquelle une mutation d'un terminal est effective de façon pour les opérateurs à éviter que leurs ressources puissent être trop longtemps utilisées par les terminaux d'autres opérateurs.

A la réception du message M5, les entités RRH₁ et RRH₃ mettent en œuvre la mutation effective du terminal T1. Cette mutation comprend par exemple l'envoi d'une instruction d'attachement à l'entité RRH₃, transmise par l'entité RRH₁ au terminal T1 et l'envoi d'une instruction de détachement envoyée par l'entité RRH₁ ou bien par l'entité RRH₃ au terminal T1, une fois que le terminal est attaché à l'entité RRH₃. Le terminal T1 s'attache ainsi à l'entité RRH3 en transmettant à l'entité RRH₃ un message M6 d'attachement lors de l'étape E15. L'entité RRH₃ reçoit le message M6 d'attachement lors de l'étape E16. Cette étape met fin à la phase P2.

La phase P3 correspond à l'envoi lors des étapes E17 et E19 par les entités RRH₁ et RRH₃ d'un message M7 et M8 d'indication, acquittant la mutation du terminal T1 réalisée. Ces messages M7 et M8 peuvent, selon un exemple, comprendre des informations relatives à la charge des entités et des paramètres de qualité de service, mis à jour suite à la mutation. Le serveur 20, lorsqu'il reçoit lors des étapes E18 et E20 les messages M7 et M8, peut avantageusement mettre à jour le facteur de coopération voire également les informations de charge et de qualité de service relatives aux entités RRH₁ et RRH₃. Le serveur 20 peut ainsi déterminer une nouvelle valeur d'éligibilité, suite à la mutation réussie du terminal, qu'il peut exploiter pour les prochaines mutations à gérer entre les deux entités.

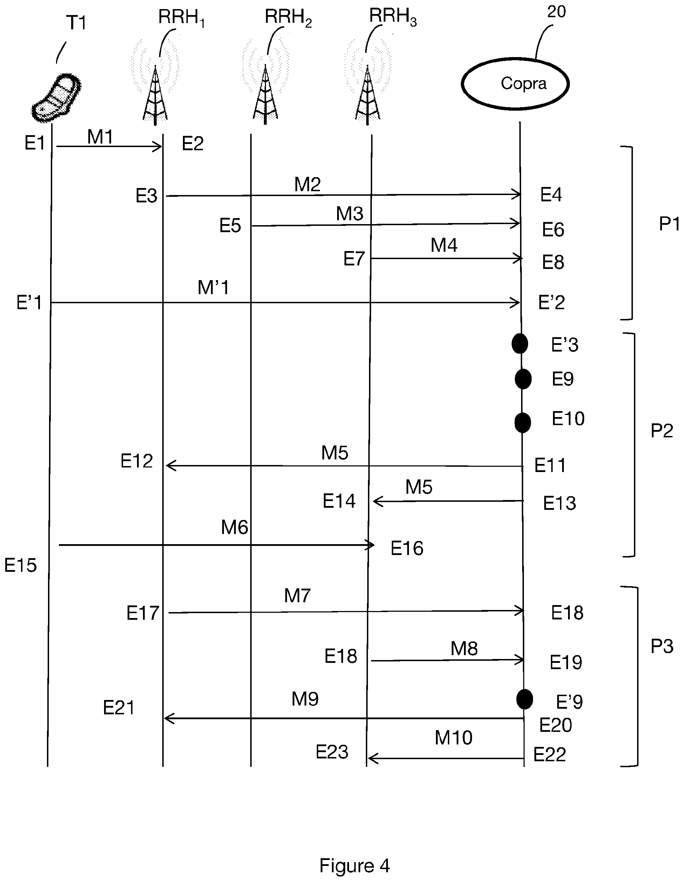

On se réfère maintenant à la **figure 4** qui présente un aperçu du procédé de mutation selon un deuxième mode de réalisation de l'invention.

Les étapes présentées dans la figure 3 sont également valides pour le mode de réalisation décrit dans la figure 4. Ce mode de réalisation comprend en outre les étapes suivantes.

Lors de la phase P1, le terminal T1 transmet lors de l'étape E'1 un message M'1 d'information comprenant des données relatives à l'attachement du terminal T1 à l'entité RRH₁. Notamment, le message M'1 peut comprendre une information de localisation géographique du terminal T1, telle qu'une donnée GPS, ainsi qu'un débit de données effectivement constaté par le terminal T1. Les données transmises par le terminal T1 dans le message M'1 sont mises à profit par le serveur 20, à la réception du message M'1 lors de l'étape E'2, pour l'exécution des étapes E'3 (décrite ci-après), E9, E10 de la phase P2.

Les messages M2, M3, M4 et M'1 comprennent en outre un identifiant de réseau ou de tranche de réseau, une tranche de réseau comprenant des fonctions spécifiques d'acheminement et de traitement de données, le plus souvent virtualisés, sur une même infrastructure physique pour des besoins liés au type de terminal, d'application, ou de clients. Ainsi des applications ou des terminaux ayant des caractéristiques de trafic proche (latence, qualité, sécurité...) utiliseront une tranche de réseau identique. Cette information de réseau ou de tranche de réseau peut ensuite être utilisée par le serveur 20 pour sélectionner une entité supportant également la tranche de réseau indiquée dans les messages M2, M3, M4, M'1 reçus. Selon un exemple, le serveur 20 pondère de façon importante l'identifiant de tranche de réseau dans la détermination de la valeur d'éligibilité de façon à ne retenir qu'une entité supportant la tranche de réseau.

Une phase E'3 est ajoutée à la phase P2 décrite dans le mode de réalisation de la figure 3 et correspond à la détermination d'un groupe d'entités en fonction de l'information de localisation géographique transmise par le terminal dans le message M'1. Cette information est avantageusement utilisée car elle permet au serveur 20 de considérer des entités positionnées en fonction du terminal T1 et non pas seulement en fonction de l'entité RRH₁. La prise en compte de l'information de localisation en provenance du terminal T1 permet de diminuer le nombre d'échecs de mutation en raison de problème d'accessibilité du terminal T1 vers des entités indiquées par le serveur 20 mais possiblement hors de portée du terminal T1 en raison de problèmes de propagation radio notamment.

Dans ce mode de réalisation, la phase P3 est également modifiée par rapport à au mode de réalisation décrit dans la figure 3. En effet, à la réception des messages M7 et M8, le serveur 20 calcule lors de l'étape E'9 une valeur d'éligibilité pour chaque entité impliquée dans la mutation, à savoir l'entité RRH₁ et l'entité RRH₃ en fonction des messages M7 et M8 reçus. Ce mode de réalisation se distingue en outre du premier mode par l'émission lors de l'étape E20 d'un message M9 à l'entité RRH₁ sa nouvelle valeur d'éligibilité. Le serveur 20 transmet également à l'entité RRH₃, lors de l'étape E22, sa valeur d'éligibilité recalculée suite à la mutation, dans un message M10. Ces deux messages M9 et M10 sont respectivement reçus par les entités RRH₁ et RRH₃ lors des étapes E21 et E23. La connaissance de ces valeurs permet aux entités RRH₁ et RRH₃ de pouvoir gérer elles-mêmes des prochaines mutations entre elles sans recourir nécessairement à l'intervention du serveur 20. Si l'une des entités RRH₁ ou RRH₃ connaît un problème de charge, elle peut solliciter l'autre entité RRH et effectuer une mutation d'un ou plusieurs terminaux sans recourir à l'intervention du serveur 20. Dans ce mode de réalisation, les entités peuvent ainsi gérer elles-mêmes des mutations permettant de réduire ainsi la charge relative au trafic de signalisation vers le serveur 20 ou bien de pouvoir assurer des mutations lorsque le serveur 20 est hors service.

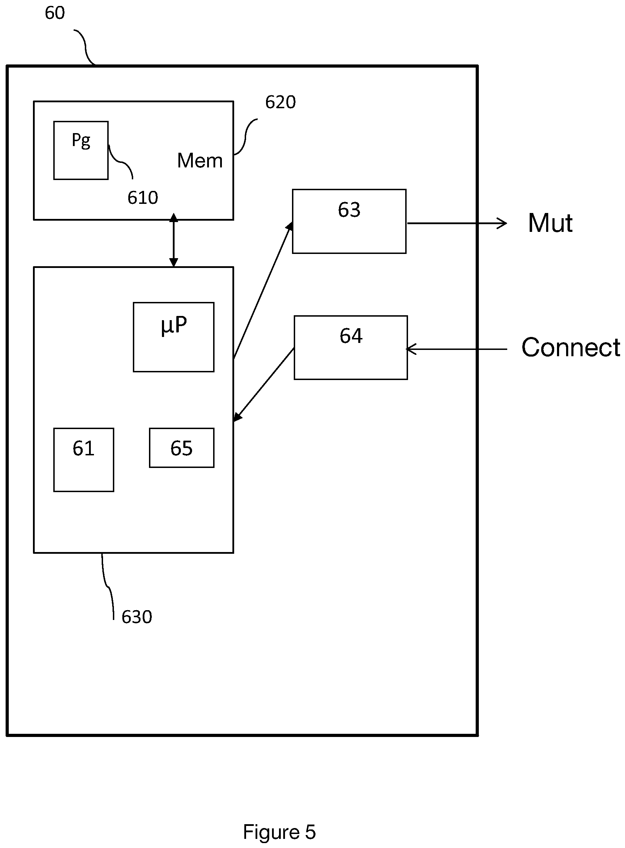

En relation avec la **figure 5**, on présente un exemple de structure d'un dispositif de mutation, selon un aspect de l'invention.

Le dispositif 60 de mutation met en œuvre le procédé de mutation, dont différents modes de réalisation viennent d'être décrits.

Un tel dispositif 60 peut être mis en œuvre dans une entité d'accès (physique ou virtuelle) ou dans un dispositif plus centralisé de façon autonome, c'est-à-dire en utilisant un équipement spécifique, ou intégrée à un dispositif d'une infrastructure mobile.

Par exemple, le dispositif 60 comprend une unité de traitement 630, équipée par exemple d'un microprocesseur µP, et pilotée par un programme d'ordinateur 610, stocké dans une mémoire 620 et mettant en œuvre le procédé de mutation selon l'invention. A l'initialisation, les instructions de code du programme d'ordinateur 610 sont par exemple chargées dans une mémoire RAM, avant d'être exécutées par le processeur de l'unité de traitement 630.

Un tel dispositif 60 comprend :
- un récepteur 64, destiné à recevoir, en provenance des entités de l'ensemble, un message de connectivité Connect comprenant au moins un paramètre relatif à la qualité de transmission des données entre ledit terminal et chaque dite entité,
- un module 61 de détermination, destiné à déterminer une valeur d'éligibilité relative à chaque entité, à partir de l'au moins un paramètre reçu et d'un facteur de coopération entre la première entité et chaque autre entité d'accès de l'ensemble,
- un module 65 de sélection, destiné à sélectionner la deuxième entité à partir de la valeur d'éligibilité déterminée,
- un émetteur 63, apte à émettre à destination de la première entité et de la deuxième entité, un message Mut de mutation comprenant une instruction de mutation et comprenant en outre un identifiant de la première entité d'accès et un identifiant de la deuxième entité d'accès.

Le procédé de mutation s'avère particulièrement utile pour fournir aux clients une connectivité de bonne qualité à une infrastructure tout en limitant les coûts associés pour les opérateurs. Le procédé suppose néanmoins des accords, qui peuvent être temporaires, entre les opérateurs. Notamment, en cas de défaillance d'un réseau d'opérateur dans une zone géographique donnée, les clients ayant un contrat avec l'opérateur en question pourront néanmoins accéder à leurs services de communication en utilisant les ressources d'un autre opérateur, si l'autre opérateur accepte, y compris temporairement, les attachements de ces clients qui lui sont à priori « étrangers ». Le procédé de mutation peut en outre être enrichi en permettant à un opérateur de limiter les accès des clients d'autres opérateurs à des services spécifiques et/ou à des créneaux horaires prédéfinis. Cela permet à un opérateur d'une part de limiter l'utilisation de son infrastructure à des services par exemple peu consommateurs de ressources techniques et d'autre part d'appliquer des politiques différentes selon le moment de la journée, de la semaine ou du mois. Le procédé peut être mis en œuvre entre opérateurs de différents types. Notamment il peut s'agir d'opérateurs de réseaux d'infrastructures de télécommunications mais aussi des opérateurs assurant la gestion de réseaux de taille plus réduite tels que des hots spots déployés dans des magasins, des gares, des aéroports voire dans les domiciles de clients. On peut en outre envisager que la mutation d'un terminal d'une entité vers une autre entité soit effective pour une application, si les flux sont transportés sur une tranche de réseau spécifique par exemple, et que les flux d'une autre application restent acheminés par la première entité d'accès. Le terminal serait ainsi attaché simultanément à deux entités d'accès contrôlées par deux opérateurs différents.

## Revendications

1. Procédé de mutation d'un terminal (T1) mobile attaché à une première entité (RRH₁) d'accès d'un opérateur (MNO1) vers une deuxième entité (RRH₃) d'accès, contrôlée par un autre opérateur (MNO3), d'un ensemble d'entités (RRH₁, RRH₂, RRH₃) d'accès contrôlées par au moins deux opérateurs (MNO1, MNO2, MNO3) au sein d'un réseau (100) de communication, le procédé de mutation conforme aux techniques de handover mis en œuvre par un dispositif (20) de contrôle pour l'acheminement de données du terminal (T1) , étant **caractérisé en ce qu'**il comprend :
- une étape (E4, E6, E8) de réception, en provenance des entités (RRH₁, RRH₂, RRH₃) de l'ensemble, d'un message (M2, M3, M4) de connectivité comprenant au moins un paramètre relatif à une estimation de la qualité de transmission des données entre ledit terminal (T1) et chaque dite entité (RRH₁, RRH₂, RRH₃),
- une étape (E9) de détermination d'une valeur d'éligibilité relative à chaque entité (RRH₁, RRH₂, RRH₃), à partir de l'au moins un paramètre reçu et d'un facteur de coopération entre la première entité (RRH₁) et chaque autre entité (RRH₂, RRH₃) d'accès de l'ensemble, ledit facteur correspondant à un pourcentage de mutations réussies entre l'entité (RRH1) et chaque autre entité (RRH2, RR3) dans un intervalle de temps passé,
- une étape (E10) de sélection de la deuxième entité (RRH₃) à partir de la valeur d'éligibilité déterminée,
- une étape (E11, E13) d'émission à destination de la première entité (RRH₁) et de la deuxième entité (RRH₃) d'un message (M5) de mutation comprenant une instruction de mutation et comprenant en outre un identifiant de la première entité (RRH₁) d'accès et un identifiant de la deuxième entité (RRH₃) d'accès.

2. Procédé de mutation, selon la revendication 1, comprenant en outre une étape (E18, E20) de réception en provenance de la première (RRH₁) et de la deuxième entité (RRH₃) d'un message (M7, M8) d'indication comprenant une donnée d'acquittement de la mutation.

3. Procédé de mutation, selon la revendication 2, où le message (M7, M8) d'indication comprend en outre l'au moins un paramètre de transmission de données, mis àjour suite à la mutation, entre ledit terminal (T1) et chacune des deux entités (RRH₁, RRH₃) d'accès.

4. Procédé de mutation, selon la revendication 1, comprenant en outre une étape (E20, E21) d'émission par le dispositif (20) de contrôle à destination de chacune des deux entités (RRH₁, RRH₃) un message (M9, M10) de mise à jour de leur valeur d'éligibilité suite à la mutation.

5. Procédé de mutation, selon la revendication 1, comprenant en outre une étape (E'1) de réception en provenance du terminal (T1) d'un message (M'1) d'information comprenant au moins une donnée de communication.

6. Procédé de mutation, selon la revendication 5, où le message (M'1) d'information comprend en outre un paramètre de positionnement géographique du terminal (T1).

7. Procédé de mutation, selon la revendication 1, où le message (M2, M3, M4) de connectivité comprend en outre une donnée sur la charge de l'entité (RRH₁, RRH₂, RRH₃).

8. Procédé de mutation, selon la revendication 1, où le message (M5) de mutation comprend en outre une information relative à la durée de la mutation.

9. Procédé de mutation, selon la revendication 1, où l'ensemble d'entités (RRH₁, RRH₂, RRH₃) d'accès se trouve dans une zone géographique délimitée en fonction de la localisation géographique de la première entité (RRH₁).

10. Procédé de mutation, selon la revendication 1, où le message (M2, M3, M4) de connectivité comprend en outre un identifiant de tranche de réseau.

11. Dispositif de mutation, conforme aux techniques de handover, d'un terminal (T1) mobile attaché à une première entité (RRH₁) d'accès d'un opérateur (MNO1) vers une deuxième entité (RRH₃) d'accès contrôlée par un autre opérateur (MNO3), d'un ensemble d'entités (RRH₁, RRH₂, RRH₃) d'accès contrôlées par au moins deux opérateurs (MNO1, MNO2, MNO3) au sein d'un réseau (100) de communication, **caractérisé en ce qu'**il comprend :
- un récepteur (64), destiné à recevoir, en provenance des entités (RRH₁, RRH₂, RRH₃) de l'ensemble, un message (M2, M3, M4) de connectivité comprenant au moins un paramètre relatif à une estimation de la qualité de transmission des données entre ledit terminal (T1) et chaque dite entité (RRH₁, RRH₂, RRH₃),
- un module (61) de détermination, destiné à déterminer une valeur d'éligibilité relative à chaque entité (RRH₁, RRH₂, RRH₃), à partir de l'au moins un paramètre reçu et d'un facteur de coopération entre la première entité (RRH₁) et chaque autre entité (RRH₂, RRH₃) d'accès de l'ensemble, ledit facteur correspondant à un pourcentage de mutations réussies entre l'entité (RRH1) et chaque autre entité (RRH2, RR3) dans un intervalle de temps passé,
- un module (65) de sélection, destiné à sélectionner la deuxième entité (RRH₃) à partir de la valeur d'éligibilité déterminée,
- un émetteur (63), destiné à émettre à destination de la première entité (RRH₁) et de la deuxième entité (RRH₃), un message (M5) de mutation comprenant une instruction de mutation et comprenant en outre un identifiant de la première entité d'accès (RRH₁) et un identifiant de la deuxième entité (RRH₃) d'accès.

12. Système de mutation comprenant :
- un dispositif (20) de contrôle comprenant un dispositif de mutation, selon la revendication 11,
- une première entité (RRH₁) d'accès d'un opérateur (MNO1),
- une deuxième entité (RRH₃) d'accès contrôlée par un autre opérateur (MNO3).

13. Programme d'ordinateur, **caractérisé en ce qu'**il comprend des instructions pour la mise en œuvre des étapes du procédé de mutation selon la revendication 1, lorsque ce procédé est exécuté par un processeur d'un dispositif de mutation conformément à la revendication 11.

14. Support d'enregistrement lisible par un dispositif de mutation conforme à la revendication 11, sur lequel est enregistré le programme selon la revendication 13.

## Patentansprüche

1. Verfahren zur Übertragung eines mobilen Endgeräts (Tl), das an eine erste Zugangseinheit (RRH₁) eines Betreibers (MNO1) gebunden ist, zu einer zweiten Zugangseinheit (RRH₃), die von einem anderen Betreiber (MNO3) kontrolliert wird, aus einer Gruppe von Zugangseinheiten (RRH₁, RRH₂, RRH₃), die von mindestens zwei Betreibern (MNO1, MNO2, MNO3) innerhalb eines Kommunikationsnetzes (100) kontrolliert werden, wobei das Übertragungsverfahren Handover-Techniken entspricht, die von einer Steuervorrichtung (20) zur Weiterleitung der Daten des Endgeräts (Tl) umgesetzt werden, **dadurch gekennzeichnet, dass** es umfasst:
- einen Schritt (E4, E6, E8) des Empfangens einer Konnektivitätsmeldung (M2, M3, M4), die mindestens einen Parameter einer Schätzung der Datenübertragungsqualität zwischen dem Endgerät (Tl) und jeder Einheit (RRH₁, RRH₂, RRH₃) umfasst, von den Einheiten (RRH₁, RRH₂, RRH₃) der Gruppe,
- einen Schritt (E9) des Bestimmens eines Eignungswerts zu jeder Einheit (RRH₁, RRH₂, RRH₃) auf Grundlage des mindestens einen empfangenen Parameters und eines Kooperationsfaktors zwischen der ersten Einheit (RRH₁) und jeder anderen Zugangseinheit (RRH₂, RRH₃) der Gruppe, wobei der Faktor einem Prozentsatz erfolgreicher Übertragungen zwischen der Einheit (RRH₁) und jeder anderen Einheit (RRH₂, RRH₃) in einem vergangenen Zeitintervall entspricht,
- einen Schritt (E10) des Auswählens der zweiten Einheit (RRH₃) auf Grundlage des bestimmten Eignungswerts,
- einen Schritt (E11, E13) des Sendens einer Übertragungsmeldung (M5), die eine Übertragungsanweisung umfasst und außerdem eine Kennung der ersten Zugangseinheit (RRH₁) und eine Kennung der zweiten Zugangseinheit (RRH₃) umfasst, an die erste Einheit (RRH₁) und die zweite Einheit (RRH₃) .

2. Verfahren zur Übertragung nach Anspruch 1, das außerdem einen Schritt (E18, E20) des Empfangens einer Hinweismeldung (M7, M8), die eine Dateneinheit zur Bestätigung der Übertragung umfasst, von der ersten (RRH₁) und der zweiten Einheit (RRH₃) umfasst.

3. Verfahren zur Übertragung nach Anspruch 2, bei dem die Hinweismeldung (M7, M8) außerdem den mindestens einen Parameter zur Datenübertragung zwischen dem Endgerät (Tl) und jeder der beiden Zugangseinheiten (RRH₁, RRH₃) umfasst, der infolge der Übertragung aktualisiert wurde.

4. Verfahren zur Übertragung nach Anspruch 1, das außerdem einen Schritt (E20, E21) des Sendens einer Meldung (M9, M10) über die Aktualisierung ihres Eignungswerts infolge der Übertragung durch die Steuervorrichtung (20) an jede der beiden Einheiten (RRH₁, RRH₃) umfasst.

5. Verfahren zur Übertragung nach Anspruch 1, das außerdem einen Schritt (E'1) des Empfangens einer Informationsmeldung (M'1), die mindestens eine Kommunikationsdateneinheit umfasst, vom Endgerät (Tl) umfasst.

6. Verfahren zur Übertragung nach Anspruch 5, bei dem die Informationsmeldung (M'1) außerdem einen Parameter der geografischen Ortbestimmung des Endgeräts (Tl) umfasst.

7. Verfahren zur Übertragung nach Anspruch 1, bei dem die Konnektivitätsmeldung (M2, M3, M4) außerdem eine Dateneinheit über die Belastung der Einheit (RRH₁, RRH₂, RRH₃) umfasst.

8. Verfahren zur Übertragung nach Anspruch 1, bei dem die Übertragungsmeldung (M5) außerdem eine Information über die Dauer der Übertragung umfasst.

9. Verfahren zur Übertragung nach Anspruch 1, bei dem sich die Gruppe der Zugangseinheiten (RRH₁, RRH₂, RRH₃) in einem geografischen Gebiet befindet, das in Abhängigkeit vom geografischen Standort der ersten Einheit (RRH₁) begrenzt ist.

10. Verfahren zur Übertragung nach Anspruch 1, bei dem die Konnektivitätsmeldung (M2, M3, M4) außerdem eine Kennung eines Netz-Slices umfasst.

11. Vorrichtung zur konformen Übertragung entsprechend Handover-Techniken eines mobilen Endgeräts (Tl), das an eine erste Zugangseinheit (RRH₁) eines Betreibers (MNO1) gebunden ist, zu einer zweiten Zugangseinheit (RRH₃), die von einem anderen Betreiber (MNO3) kontrolliert wird, aus einer Gruppe von Zugangseinheiten (RRH₁, RRH₂, RRH₃), die von mindestens zwei Betreibern (MNO1, MNO2, MNO3) innerhalb eines Kommunikationsnetzes (100) kontrolliert werden, **dadurch gekennzeichnet, dass** sie umfasst:
- einen Empfänger (64) zum Empfangen einer Konnektivitätsmeldung (M2, M3, M4), die mindestens einen Parameter einer Schätzung der Datenübertragungsqualität zwischen dem Endgerät (Tl) und jeder Einheit (RRH₁, RRH₂, RRH₃) umfasst, von den Einheiten (RRH₁, RRH₂, RRH₃) der Gruppe,
- ein Bestimmungsmodul (61) zum Bestimmen eines Eignungswerts zu jeder Einheit (RRH₁, RRH₂, RRH₃) auf Grundlage des mindestens einen empfangenen Parameters und eines Kooperationsfaktors zwischen der ersten Einheit (RRH₁) und jeder anderen Zugangseinheit (RRH₂, RRH₃) der Gruppe, wobei der Faktor einem Prozentsatz erfolgreicher Übertragungen zwischen der Einheit (RRH₁) und jeder anderen Einheit (RRH₂, RRH₃) in einem vergangenen Zeitintervall entspricht,
- ein Auswahlmodul (65) zum Auswählen der zweiten Einheit (RRH₃) auf Grundlage des bestimmen Eignungswerts,
- einen Sender (63) zum Senden einer Übertragungsmeldung (M5), die eine Übertragungsanweisung umfasst und außerdem eine Kennung der ersten Zugangseinheit (RRH₁) und eine Kennung der zweiten Zugangseinheit (RRH₃) umfasst, an die erste Einheit (RRH₁) und die zweite Einheit (RRH₃).

12. Übertragungssystem, umfassend:
- eine Steuervorrichtung (20), die eine Übertragungsvorrichtung nach Anspruch 11 umfasst,
- eine erste Zugangseinheit (RRH₁) eines Betreibers (MNO1),
- eine zweite Zugangseinheit (RRH₃), die von einem anderen Betreiber (MNO3) kontrolliert wird.

13. Computerprogramm, **dadurch gekennzeichnet, dass** es Anweisungen zur Umsetzung der Schritte des Verfahrens zur Übertragung nach Anspruch 1 umfasst, wenn dieses Verfahren durch einen Prozessor einer Übertragungsvorrichtung nach Anspruch 11 ausgeführt wird.

14. Durch eine Übertragungsvorrichtung lesbares Speichermedium nach Anspruch 11, auf dem das Programm nach Anspruch 13 gespeichert ist.

## Claims

1. Method for transferring a mobile terminal (Tl) attached to a first access entity (RRH₁) of an operator (MNO1) to a second access entity (RRH₃), controlled by another operator (MNO3), of a set of access entities (RRH₁, RRH₂, RRH₃) controlled by at least two operators (MNO1, MNO2, MNO3) within a communication network (100), the transfer method, in accordance with handover techniques implemented by a control device (20) for conveying data of the terminal (Tl), being **characterized in that** it comprises:
- a step (E4, E6, E8) of receiving, from the entities (RRH₁, RRH₂, RRH₃) of the set, a connectivity message (M2, M3, M4) comprising at least one parameter relating to an estimate of the quality of transmission of the data between said terminal (Tl) and each said entity (RRH₁, RRH₂, RRH₃),
- a step (E9) of determining an eligibility value relating to each entity (RRH₁, RRH₂, RRH₃), on the basis of the at least one parameter received and of a factor of cooperation between the first entity (RRH₁) and each other access entity (RRH₂, RRH₃) of the set, said factor corresponding to a percentage of successful transfers between the entity (RRH₁) and each other entity (RRH2, RR3) in a past time interval,
- a step (E10) of selecting the second entity (RRH₃) on the basis of the eligibility value determined,
- a step (E11, E13) of sending, to the first entity (RRH₁) and to the second entity (RRH₃), a transfer message (M5) comprising a transfer instruction and furthermore comprising an identifier of the first access entity (RRH₁) and an identifier of the second access entity (RRH₃).

2. Transfer method according to Claim 1, furthermore comprising a step (E18, E20) of receiving, from the first (RRH₁) and from the second entity (RRH₃), an indication message (M7, M8) comprising an item of data acknowledging the transfer.

3. Transfer method according to Claim 2, where the indication message (M7, M8) furthermore comprises the at least one parameter, updated following the transfer, in respect of data transmission between said terminal (Tl) and each of the two access entities (RRH₁, RRH₃).

4. Transfer method according to Claim 1, furthermore comprising a step (E20, E21) of the control device (20) sending, to each of the two entities (RRH₁, RRH₃), a message (M9, M10) for updating their eligibility value following the transfer.

5. Transfer method according to Claim 1, furthermore comprising a step (E'1) of receiving, from the terminal (T1), an information message (M'1) comprising at least one item of communication data.

6. Transfer method according to Claim 5, where the information message (M'1) furthermore comprises a parameter of geographical positioning of the terminal (Tl) .

7. Transfer method according to Claim 1, where the connectivity message (M2, M3, M4) furthermore comprises an item of data about the load of the entity (RRH₁, RRH₂, RRH₃) .

8. Transfer method according to Claim 1, where the transfer message (M5) furthermore comprises an item of information relating to the duration of the transfer.

9. Transfer method according to Claim 1, where the set of access entities (RRH₁, RRH₂, RRH₃) is situated in a geographical area delimited as a function of the geographical location of the first entity (RRH₁).

10. Transfer method according to Claim 1, where the connectivity message (M2, M3, M4) furthermore comprises a network slice identifier.

11. Device for transferring, in accordance with handover techniques, a mobile terminal (Tl) attached to a first access entity (RRH₁) of an operator (MNO1) to a second access entity (RRH₃), controlled by another operator (MNO3), of a set of access entities (RRH₁, RRH₂, RRH₃) controlled by at least two operators (MNO1, MNO2, MNO3) within a communication network (100), **characterized in that** it comprises:
- a receiver (64), intended to receive, from the entities (RRH₁, RRH₂, RRH₃) of the set, a connectivity message (M2, M3, M4) comprising at least one parameter relating to an estimate of the quality of transmission of the data between said terminal (Tl) and each said entity (RRH₁, RRH₂, RRH₃),
- a determination module (61), intended to determine an eligibility value relating to each entity (RRH₁, RRH₂, RRH₃), on the basis of the at least one parameter received and of a factor of cooperation between the first entity (RRH₁) and each other access entity (RRH₂, RRH₃) of the set, said factor corresponding to a percentage of successful transfers between the entity (RRH1) and each other entity (RRH2, RR3) in a past time interval,
- a selection module (65), intended to select the second entity (RRH₃) on the basis of the eligibility value determined,
- a sender (63), intended to send, to the first entity (RRH₁) and to the second entity (RRH₃), a transfer message (M5) comprising a transfer instruction and furthermore comprising an identifier of the first access entity (RRH₁) and an identifier of the second access entity (RRH₃).

12. Transfer system comprising:
- a control device (20) comprising a transfer device according to Claim 11,
- a first access entity (RRH₁) of an operator (MNO1),
- a second access entity (RRH₃) controlled by another operator (MNO3).

13. Computer program, **characterized in that** it comprises instructions for the implementation of the steps of the transfer method according to Claim 1, when this method is executed by a processor of a transfer device according to Claim 11.

14. Recording medium readable by a transfer device according to Claim 11 and on which the program according to Claim 13 is recorded.
